(19) Europäisches Patentamt

European Patent Office

Office européen des brevets

(11) **EP 4 290 325 A1**

(12) **EUROPEAN PATENT APPLICATION**

(43) Date of publication:
**13.12.2023 Bulletin 2023/50**

(21) Application number: **22178436.6**

(22) Date of filing: **10.06.2022**

(51) International Patent Classification (IPC):
**G05B 19/43** (2006.01)   **F16K 31/06** (2006.01)

(52) Cooperative Patent Classification (CPC):
**G05B 19/43; F16K 31/0675; H01F 7/1844;**
G05B 2219/41333; G05B 2219/45006;
H01F 2007/1855; H01F 2007/1888

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Pittway Sarl**
**1180 Rolle (CH)**

(72) Inventor: **ONDRICH, Jan**
**1180 Rolle (CH)**

(74) Representative: **Murgitroyd & Company**
**Murgitroyd House**
**165-169 Scotland Street**
**Glasgow G5 8PL (GB)**

(54) **SYSTEM AND METHOD FOR ERROR COMPENSATION IN PULSE-WIDTH MODULATED SYSTEMS**

(57)    A gas flow regulation system is provided, the system comprising a solenoid valve configured to transition between an open position and a closed position, the solenoid valve comprising a solenoid; a power source; a switch configured to connect or disconnect the power source to the solenoid valve depending on a duty cycle of the system; and a controller comprising a memory storing: a mathematical model of an electrical circuit comprising the solenoid valve, the power source and the switch; and instructions to execute the following steps: determine a required value of current through the solenoid; measure a response of the electrical circuit to a testing signal; calculate, based on the required value of current through the solenoid, the response of the electrical circuit to the testing signal and the mathematical model of the electrical circuit, a compensation value to a duty cycle of the system; adjust the duty cycle of the system based on the compensation value.

Fig 4

Processed by Luminess, 75001 PARIS (FR)

EP 4 290 325 A1

**Description**

FIELD OF THE INVENTION

The present invention relates to systems and methods for error compensation in pulse-width modulated (PWM) systems, in particular solenoid valves.

BACKGROUND OF THE INVENTION

Many systems are based on a pulse-width modulation (PWM) technique. PWM is a method of reducing the average power delivered by an electrical signal, and it is simple and efficient way to achieve a specific output value of a process with low cost. The average value of voltage (and current) fed to the load is controlled by turning the switch between supply and load on and off at a fast rate The total power supplied to the load depends on the on / off times (active and non-active phases) of the switch.

One specific application of a PWM system is a solenoid valve. A solenoid valve may be used to control (regulate) flow of a fluid, e.g. gas. In solenoid valve, intensity of the magnetic field which creates the force for the opening of the valve is equivalent to the average value of the electric current of the winding. The valve often has a spring or other element acting against this force to close the valve in case no current is supplied to the valve.

Electric current through the solenoid valve must meet certain minimal value to ensure that the valve is open. The existing systems often compensate for e.g. influence of a supply voltage change or an influence of an ambient temperature. This is mainly achieved by a simple voltage feedback so that the current (which is proportional to the voltage as well as the force opening the valve) can be regulated.

One of the problems with existing PWM systems as applied to solenoid valves is that the components of the circuitry are not ideal. Existing systems compensating for the non-ideal behaviour of the components usually utilize a table with characteristic data of the system (thus being a system which is not self-adaptable) and/or they require complex signal processing and/or they require additional components such as pressure sensor, temperature sensor and the like.

Therefore, there is a need to provide a simple yet accurate system and method of regulating the PWM system which would mitigate the above-mentioned situation.

SUMMARY OF THE INVENTION

In a first aspect of the invention, a gas flow regulation system is provided, the system comprising a solenoid valve configured to transition between an open position and a closed position, the solenoid valve comprising a solenoid; a power source; a switch configured to connect or disconnect the power source to the solenoid valve depending on a duty cycle of the system; and a controller comprising a memory storing: a mathematical model of an electrical circuit comprising the solenoid valve, the power source and the switch; and instructions to execute the following steps: determine a required value of current through the solenoid; measure a response of the electrical circuit to a testing signal; calculate, based on the required value of current through the solenoid, the response of the electrical circuit to the testing signal and the mathematical model of the electrical circuit, a compensation value to a duty cycle of the system; and adjust the duty cycle of the system based on the compensation value.

In an embodiment of the first aspect, the compensation value in the gas flow regulation system is dependent on a difference between a switch-on time and a switch-off time of the switch.

In a second aspect of the invention, a method of controlling a gas flow regulation system, the system comprising a solenoid valve configured to move between an open position and a closed position, the solenoid valve comprising a solenoid; a power source; a switch configured to connect or disconnect the power source to the solenoid valve depending on a duty cycle of the system; and a controller comprising a memory storing: a mathematical model of an electrical circuit comprising the solenoid valve, the power source and the switch; the method comprising: determining, by the controller, a required value of current through the solenoid; measuring, by the controller, a response of the electrical circuit to a testing signal; calculating, by the controller, based on the required value of current through the solenoid, the response of the electrical circuit to the testing signal and the mathematical model of the electrical circuit, a compensation value to a duty cycle of the system; and adjusting, by the controller, the duty cycle of the system based on the compensation value.

In an embodiment of the second aspect, the method may further comprise: measuring dependency of a difference between the duty cycle instructed by the controller and the duty cycle of the system on a difference between a switch-on time and a switch-off time of the switch; and determining the compensation value based on the measured dependency.

Other embodiments are defined in the claims and described in the following detailed description.

## BRIEF DESCRIPTION OF THE DRAWINGS

Specific embodiments of the present invention will now be described, by way of example only, with reference to the accompanying drawings in which:

Figure 1 is a schematic representation of a PWM regulated system;

Figure 2 is a schematic representation of a regulator circuitry;

Figure 3 is an example of a PWM with 32 kHz frequency and corresponding current through the solenoid coil;

Figure 4 relates to an illustration of the model according to the present invention;

Figure 5 shows a flow chart of an example method according to the present invention.

## DETAILED DESCRIPTION

The below description is for illustration purposes only, and is not intended to be limiting. Various elements of embodiments described below may be combined into embodiments not explicitly described, as and when appropriate.

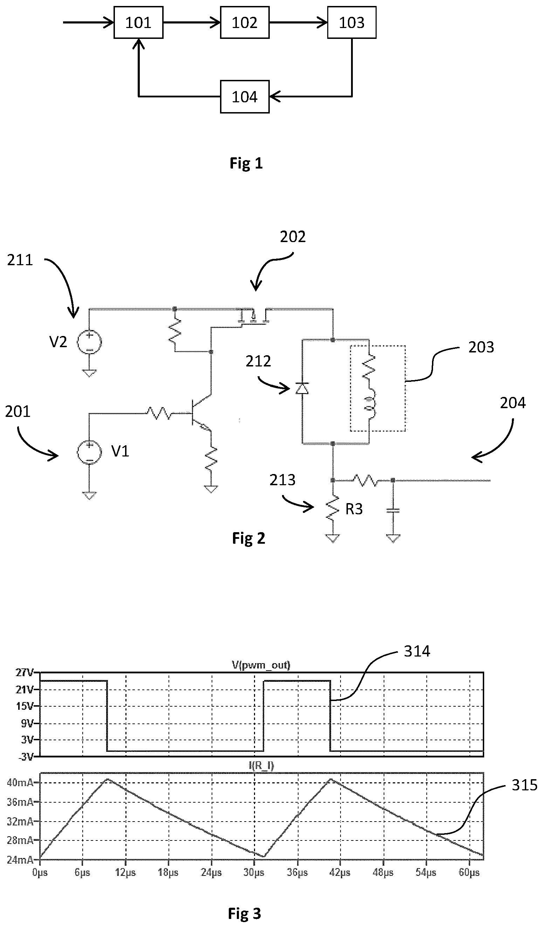

Fig 1 shows a block diagram of an example PWM regulated system. The microcontroller 101 receives a requested value of output current and outputs a first duty cycle. The first duty cycle corresponds to an ideal duty cycle, i.e. duty cycle in an ideal circuit. The switch 102 is operated in accordance with the first (ideal) duty cycle output by the microcontroller 101, changing its states between on and off (active and non-active phase, i.e. wherein the switch is conductive and non-conductive respectively) in accordance with the first (ideal) duty cycle.

To compensate for differences in various external parameters (such as supply voltage fluctuations, environment influences such as ambient temperature and the like), a feedback loop comprising an integrator 104 is provided. The integrator 104 receives a feedback signal from the solenoid valve 103 and outputs an integrated analog voltage feedback signal for the controller 101. Upon receiving the feedback signal, the feedback signal is processed by the controller 101 and the duty cycle is adjusted accordingly.

Fig 2 shows an example PWM-regulated system in more detail. The system comprises a power source 211, a switch 202 between the power source 201 and a solenoid valve 203, a microcontroller 201, a diode 212, an integrator 204, and a shunt resistor 213. It will be understood that other components may be present in the circuit.

The switch 202 is controlled by the microcontroller 201. The microcontroller 201 generates a duty cycle for the pulse-width modulation. Based on the duty cycle of the pulse-width modulation generated by the microcontroller 201, the switch 202 selectively supplies power to the solenoid valve 203.

In parallel with the solenoid valve, there is a diode 212. The diode 212 provides a continuity of the solenoid current in the non-active phase of the switch 202. Average current is proportional to the active time of the switch 202 (i.e. the time the switch is on and conducts current).

The integrator 204 provides feedback signal. The integrator 204 is connected in parallel to a shunt resistor 213. The voltage drop at the shunt resistor 213 represents the current through the load (the solenoid valve 203 and/or the diode 212); based on information about the voltage at the shunt resistor 213 and information on duty cycle generated by the microcontroller 201, the output current may be calculated.

The active and non-active phases of the switch 202 are illustrated in Fig 3. The upper part of Fig 3 shows two PWM periods with an example frequency of 32 kHz (curve 314; the 'ups' are the active phase of the switch 202, the 'downs' are the non-active phase of the switch 202), while the lower part of Fig 3 (curve 315) shows the corresponding current through the solenoid valve 203. Any other suitable PWM frequency may be used.

In the active phase of the PWM period, the switch 202 is conductive. The power supply 211 supplies electric current through the switch 202. The current flows through the solenoid valve 203 and the shunt resistor 213 and back to the power source 211.

In the non-active phase of the PWM period, the switch 202 is non-conductive. Since the switch 202 cannot carry current, the source of the current is the solenoid (coil) of the solenoid valve 203. The energy stored in the solenoid magnetic field is converted into electric current, which flows through the diode 212. The current steadily drops until either the next active phase of the switch 202 occurs or the current drops to zero (i.e. until extinction of the current in case the amount of magnetic field energy is too low).

The components of the system, such as the switch 202, are not ideal components. Therefore, the current supplied to the solenoid valve 203 does not necessarily exactly match the first (ideal) duty cycle output by the controller 201. Instead, the solenoid valve 203 operates according to a second (real) duty cycle, which may differ from the first duty cycle generated by the microcontroller 201. Therefore, the expected (ideal) current through the solenoid may differ from the real current through the solenoid. This difference in duty cycle and/or current is due to differences between an ideal component and a real component. In other words, the switch 202, due to its construction, may alter the duty cycle from the first (ideal) duty cycle to the second (real) duty cycle. This alteration may be small but still significant from the point of view of gas safety.

For example, the switch 202 may have a certain switch-on and switch-off times, i.e. the switch 202 does not go between an active and a non-active state in zero time. These switch-on / switch-off times may not be equal (for example, it may take longer for the switch to go from active to non-active phase than from non-active to active phase). This may cause the above-mentioned difference between the first and the second duty cycles and therefore a difference between the expected current flowing through the solenoid valve 103 and the real current flowing through the solenoid valve 103. For a solenoid valve regulating flow of gas, this represents a risk; generally, safety of a gas system comprising the solenoid valve is improved if there are no delays between the theoretical shut-off and the real shut-off.

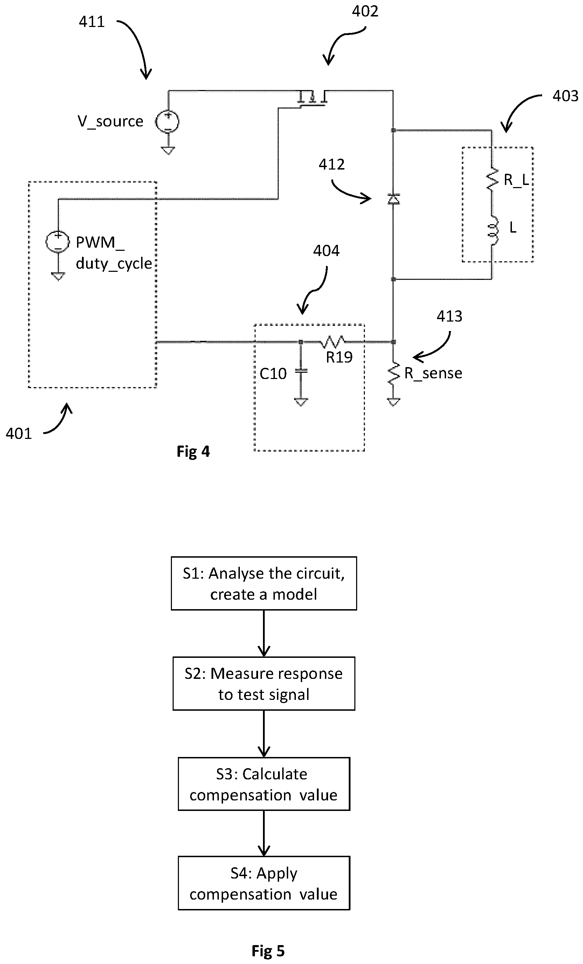

An example method to compensate for the above-described current difference (caused the unequal switch-on / switch-off times) is shown in Fig 5. The circuit may be analysed to create a mathematical model of the circuit (step S1). A test signal may be used to measure the system response (step S2), and an appropriate compensation value may be calculated based on the response of the system to the test signal and the mathematical model (step S3). The compensation value may then be applied, improving the accuracy of the system regulation (step S4).

Compared to existing compensation methods, this method is simple and may be used at any time, not just during installation or calibration phase. The method may be used even in case a full-scale calibration cannot be used (e.g. in case a significant change of the output value would not be acceptable), because the change necessary for the switch-on / switch-off compensation might be so small that the system's overall output response is minimal.

The method minimizes or even removes the need to use lookup tables with characteristics of the system. The method also minimizes or even removes the need for a complex signal analysis.

The correction calculated according to the method may be applied during the standard operation of the system, without any negative influence on the system. The method does not require additional components (such as pressure or temperature sensors and the like).

The correction calculated according to the method may provide more accurate setpoints of electrical current for the solenoid valve. Therefore, the energy consumption may be lower, and the solenoid valve may be more reliable. The method may provide a cost-effective solution to reliability problems, because it doesn't require adding components to the system.

Compensating for the switch-on / switch-off time differences may improve gas safety. In particular, after applying the compensation, delay in opening / closing the valve is minimized or even removed. This improves the solenoid gas valve accuracy, and therefore may improve gas safety.

The skilled person will understand that the improvements to reliability and/or safety of the solenoid valve could depend on the mathematical model of the system, e.g. on its complexity.

The model may be created ad-hoc, or it may be pre-stored in the memory (not shown) of the controller 201.

Referring to Fig 4, an example mathematical model and corresponding compensation may be calculated as follows. Components of the circuit of Fig 4 correspond to those in Fig 2; for the sake of simplicity, the circuit of Fig 4 comprises a power source 411, a switch 402, a solenoid valve 403, a controller 401, an integrator 404 and a shunt resistor 413. The following example is based on the differences between switch-on / switch-off times of the switch 402, but it will be understood that this is an illustrative example only.

In the following, the parameters included in the model are the solenoid valve inductance $L$ and series resistance $R_L$; the shunt resistor resistance Rsense ; supply voltage $V_{source}$; antiparallel diode forward voltage $V_{diode}$; and active and non-active phase of the PWM period (i.e. the duty cycle, a number between 0 and 1).

In the following model, the equations for coil charging in the active phase through a resistor from a voltage supply (equation 1) and coil discharging through a diode in the non-active phase of the PWM (equation 2) are used:

$$i_{RISING}(t) = \left[\left(i_0 - \frac{V_{source}}{R_{sense} + R_L}\right) * e^{\frac{-t*(R_{sense}+R_L)}{L}}\right] + \frac{V_{source}}{R_{sense} + R_L} \quad \text{(equation 1)}$$

$$i_{FALLING}(t) = \left[\left(i_0 + \frac{V_{diode}}{R_L}\right) * e^{\frac{-t*R_L}{L}}\right] - \frac{V_{diode}}{R_L} \quad \text{(equation 2)}$$

where (the respective units of measurement are given in [square brackets]):

$i_{RISING}(t)$ is current during charging of the coil in the active phase [A];
$i_{FALLING}(t)$ is current during discharging of the coil in the non-active phase [A];

$i_0$ is initial condition of the current [A];
$V_{SOURCE}$ is supply voltage [V];
$V_{DIODE}$ is diode's forward voltage [V];
$R_{SENSE}$ is shunt resistor value [Ohm];
$R_L$ is solenoid winding resistance [Ohm];
$L$ is solenoid winding inductance [H];
$t$ is time [s]; $t_1$ is active phase time [s]; and
$t_2$ is non-active phase time [s].

Calculation of the average value of the current in a steady state situation may follow the steps listed below. (Notation is explained below; the numbering of steps as well as the numbering of the equations is provided for ease of reference only.)

1. Test if the current drops down to zero in the non-active phase:

a. Calculate a current level achieved after the first active phase with zero initial current:

$$i_{L_{RAMP}}(t) = \frac{V_{source}}{R_{sense} + R_L} * \left(1 - e^{\frac{-t1*(R_{sense}+R_L)}{L}}\right) \quad \text{(equation 3)}$$

b. Calculate a time until the current extinction:

$$t_{EXT} = \frac{-ln\left(\frac{V_{diode}}{R_L * i_{L\_RAMP} + V_{diode}}\right)L}{R_L} \quad \text{(equation 4)}$$

c. Based on the result of the steps 1a and 1b, choose an appropriate model for further calculation. If the current flows during the whole PWM period (including the whole of the non-active phase of the switch), choose MODEL 1. In case the current falls to zero before the next active phase of the switch, choose MODEL 2.

2. MODEL 1 (to be preferably used if the current flows during the whole PWM period):

a. Find minimum and maximum current in the steady state situation as per equations 5 and 6:

$$I_{max} = \left[\left(I_{min} - \frac{V_{source}}{R_{sense} + R_L}\right) * e^{\frac{-t_1*(R_{sense}+R_L)}{L}}\right] + \frac{V_{source}}{R_{sense} + R_L} \quad \text{(equation 5)}$$

$$I_{min} = \left[\left(I_{max} + \frac{V_{diode}}{R_L}\right) * e^{\frac{-t_2*R_L}{L}}\right] - \frac{V_{diode}}{R_L} \quad \text{(equation 6)}$$

b. Calculate the average value of the current in the active and non-active phase:

$$I_{L_{AVG\_ACT}} = \frac{1}{t1} \int_0^{t1} \left[\left(I_{min} - \frac{V_{source}}{R_{sense}+R_L}\right) * e^{\frac{-t1*(R_{sense}+R_L)}{L}} + \frac{V_{source}}{R_{sense}+R_L}\right] dt1 =$$

$$= \frac{1}{t1}\left[\frac{t1 * V_{source}}{R_{sense} + R_L} - \frac{L\, e^{\frac{-t1*(R_{sense}+R_L)}{L}} * (R_L\, I_{min} - V_{source} + R_{sense}\, I_{min})}{(R_{sense} + R_L)^2}\right]_0^{t1} \quad \text{(equation 7)}$$

$$I_{L_{AVG\_NACT}} = \frac{1}{t2} \int_0^{t2} \left[ \left( I_{max} + \frac{V_{diode}}{R_L} \right) * e^{\frac{-t2*R_L}{L}} \right] - \frac{V_{diode}}{R_L} \, dt2 =$$

$$= \frac{1}{t2} \left[ -\frac{t2 * V_{diode}}{R_L} - \frac{L \, e^{\frac{-t2*R_L}{L}} * (V_{diode} + R_L \, I_{max})}{R_L^2} \right]_0^{t2} \quad \text{(equation 8)}$$

c. Calculate an average current concerning time ratio:

$$I_{AVG\_MODEL1} = \frac{I_{L_{AVG\_ACT}} * t1}{T} + \frac{I_{L_{AVG\_NACT}} * t2}{T} \quad \text{(equation 9)}$$

3. MODEL 2 (to be preferably used in case the current drops to zero in the switch non-active phase):

a. Calculate an average current in the active phase (current flowing through the coil):

$$I_{L_{AVG\_RISE}} = \frac{1}{t1} \int_0^{t1} \left( \frac{V_{source}}{R_{sense} + R_L} \right) * e^{\frac{-t1*(R_{sense} + R_L)}{L}} + \frac{V_{source}}{R_{sense} + R_L} \, dt1 =$$

$$= \frac{1}{t1} \left[ \frac{V_{source} \left( L \, e^{\frac{-t1*(R_{sense} + R_L)}{L}} + R_L * t1 + R_{sense} * t1 - L \right)}{(R_{sense} + R_L)^2} \right]_0^{t1} \quad \text{(equation 10)}$$

b. Calculate an average current value in the non-active phase (until the current drops to zero):

$$I_{L_{AVG\_EXT}} = \frac{1}{t_{EXT}} \int_0^{t_{EXT}} \left( i_{L\_RAMP} + \frac{V_{diode}}{R_L} \right) * e^{\frac{-t_{EXT}*R_L}{L}} - \frac{V_{diode}}{R_L} \, dt =$$

$$= \frac{1}{t_{EXT}} \left[ -\frac{L * R_L * i_{L\_RAMP} * e^{\frac{-t_{EXT}*R_L}{L}} + L * V_{diode} * e^{\frac{-t_{EXT}*R_L}{L}} - L * R_L * i_{L\_RAMP} + V_{diode} * t_{EXT} * R_L - L * V_{diode}}{R_L^2} \right]_0^{t_{EXT}}$$

$$\text{(equation 11)}$$

c. Calculate an average current value weighted by time ratios:

$$I_{AVG\_MODEL2} = \frac{I_{L_{AVG\_RISE}} * t1}{T} + \frac{I_{L_{AVG\_EXT}} * t_{EXT}}{T} \quad \text{(equation 12)}$$

In the models above, the following notation is used, with the respective units of measurement are given in [square brackets]):

$i_{L\_RAMP}$ is current value (with zero initial condition) [A];
$I_{L\_AVG\_ACT}$ is average current value in the active phase (MODEL 1) [A];
$I_{L\_AVG\_NACT}$ is average current value in the non-active phase (MODEL 1) [A];
$I_{L\_AVG\_MODEL1}$ is average current value in the whole PWM period (MODEL 1) [A];
$I_{max}$ maximum (peak) current (MODEL 1) [A];
$I_{min}$ minimum current (MODEL 1) [A];
$I_{L\_AVG\_RISE}$ is average current value in the active phase (MODEL 2) [A];
$I_{L\_AVG\_EXT}$ is average current value in the non-active phase (MODEL 2) [A];

$I_{L\_AVG\_MODEL2}$ is average current value in the whole PWM period (MODEL 2) [A]

$V_{source}$ is supply voltage [V];

$V_{diode}$ is diode's forward voltage [V];

$R_{sense}$ is shunt resistor value [Ohm];

$R_L$ is solenoid winding resistance [Ohm];

$L$ is solenoid winding inductance [H];

$t_1$ is active phase time [s];

$t_2$ is non-active phase time [s];

$t_{EXT}$ is time to extinction of the current in non-active phase [s]; and

$T$ is PWM period $(T=t1+t2)$ [s].

**Claims**

1. A gas flow regulation system, comprising:

   a solenoid valve configured to transition between an open position and a closed position, the solenoid valve comprising a solenoid;
   a power source;
   a switch configured to connect or disconnect the power source to the solenoid valve depending on a duty cycle of the system; and
   a controller comprising a memory storing:

      a mathematical model of an electrical circuit comprising the solenoid valve, the power source and the switch; and
      instructions to execute the following steps:

         - determine a required value of current through the solenoid;
         - measure a response of the electrical circuit to a testing signal;
         - calculate, based on the required value of current through the solenoid, the response of the electrical circuit to the testing signal and the mathematical model of the electrical circuit, a compensation value to a duty cycle of the system;
         - adjust the duty cycle of the system based on the compensation value.

2. The gas flow regulation system of claim 1, wherein the compensation value is dependent on a switch-on time of the switch.

3. The gas flow regulation system of claim 1 or claim 2, wherein the compensation value is dependent on a switch-off time of the switch.

4. The gas flow regulation system of any one of the preceding claims, wherein the compensation value is dependent on a difference between a switch-on time and a switch-off time of the switch.

5. The gas flow regulation system of claim 1 or claim 2, wherein the instructions further comprise the following steps:

   - create the mathematical model;
   - store the mathematical model in the memory.

6. The gas flow regulation system of any one of the preceding claims, further comprising at least one of the following components: an integrator, a diode, a shunt resistor.

7. The gas flow regulation system of any one of the preceding claims, wherein the memory stores a first mathematical model and a second mathematical model, and wherein the instructions further comprise the following steps:

   - determine whether the current flows through the circuit during the whole PWM period or whether the current drops to zero in the switch non-active phase; and
   - select a model from the first and the second mathematical model based on determination whether the current flows through the circuit during the whole PWM period or whether the current drops to zero in the switch non-active phase.

8. A method of controlling a gas flow regulation system, the system comprising:

> a solenoid valve configured to move between an open position and a closed position, the solenoid valve comprising a solenoid;
> a power source;
> a switch configured to connect or disconnect the power source to the solenoid valve depending on a duty cycle of the system; and
> a controller comprising a memory storing: a mathematical model of an electrical circuit comprising the solenoid valve, the power source and the switch;
> the method comprising:
>
> > - determining, by the controller, a required value of current through the solenoid;
> > - measuring, by the controller, a response of the electrical circuit to a testing signal;
> > - calculating, by the controller, based on the required value of current through the solenoid, the response of the electrical circuit to the testing signal and the mathematical model of the electrical circuit, a compensation value to a duty cycle of the system;
> > - adjusting, by the controller, the duty cycle of the system based on the compensation value.

9. The method of claim 8, wherein the method further comprises:

> measuring dependency of a difference between the duty cycle instructed by the controller and the duty cycle of the system on a switch-on time of the switch; and
> determining the compensation value based on the measured dependency.

10. The method of claim 8 or claim 9, wherein the method further comprises:

> measuring dependency of a difference between the duty cycle instructed by the controller and the duty cycle of the system on a switch-off time of the switch; and
> determining the compensation value based on the measured dependency.

11. The method of any one of claims 8 to 10, wherein the method further comprises:

> measuring dependency of a difference between the duty cycle instructed by the controller and the duty cycle of the system on a difference between a switch-on time and a switch-off time of the switch; and
> determining the compensation value based on the measured dependency.

12. The method of any one of claims 8 to 11, wherein the method further comprises:

> - creating, by the controller, the mathematical model;
> - storing, by the controller, the mathematical method in the memory.

13. The method of any one of claims 8 to 12, wherein the system further comprises at least one of the following components: an integrator, a diode, a shunt resistor.

14. The method of any one of claims 8 to 13, wherein the memory stores a first mathematical model and a second mathematical model, and wherein the method further comprises the following steps:

> - determine, by the controller, whether the current flows through the circuit during the whole PWM period or whether the current drops to zero in the switch non-active phase; and
> - select, by the controller, a model from the first and the second mathematical model based on determination whether the current flows through the circuit during the whole PWM period or whether the current drops to zero in the switch non-active phase.

**Fig 1**

**Fig 2**

**Fig 3**

**Fig 4**

S1: Analyse the circuit, create a model

↓

S2: Measure response to test signal

↓

S3: Calculate compensation value

↓

S4: Apply compensation value

**Fig 5**

Europäisches
Patentamt

European
Patent Office

Office européen
des brevets

# EUROPEAN SEARCH REPORT

Application Number

**EP 22 17 8436**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 296 256 A (CONTINENTAL AUTOMOTIVE HOLDING CO LTD) 1 October 2019 (2019-10-01) | 1,5-8, 12-14 | INV. G05B19/43 F16K31/06 |
| A | * paragraphs [0006], [0026], [0041], [0033], [0010], [0028], [0029], [0025], [0040] * | 2-4,9-11 | |
| | ----- | | |

| | | | |
|---|---|---|---|
| | | | TECHNICAL FIELDS SEARCHED (IPC) |
| | | | G05B F16K |

The present search report has been drawn up for all claims

| Place of search | Date of completion of the search | Examiner |
|---|---|---|
| The Hague | 23 November 2022 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8436

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2022

| Patent document cited in search report | Publication date | Patent family member(s) | Publication date |
|---|---|---|---|
| CN 110296256 A | 01-10-2019 | NONE | |

EPO FORM P0459